(19) Europäisches Patentamt
European Patent Office
Office européen des brevets

(11) Numéro de publication: **0 237 405**
**A1**

# (12) DEMANDE DE BREVET EUROPEEN

(21) Numéro de dépôt: 87400430.2

(22) Date de dépôt: 26.02.87

(51) Int.Cl.³: **C 01 B 7/14**
H 01 S 3/095

(30) Priorité: 26.02.86 FR 8602653

(43) Date de publication de la demande:
16.09.87 Bulletin 87/38

(84) Etats contractants désignés:
DE

(71) Demandeur: Office National d'Etudes et de Recherches Aerospatiales (O.N.E.R.A.)
29 Avenue de la Division Leclerc
F-92320 Châtillon-sous-Bagneux(FR)

(72) Inventeur: Verdier, Claude
4 Rue Saint Martin
F-78640 Neauphle Le Château(FR)

(72) Inventeur: Leporcq, Bruno
4 Avenue de l'Abbé Roussel
F-75016 Paris(FR)

(72) Inventeur: Georges, Eric
1 Bis, rue Louis Massotte
F-78530 Buc(FR)

(72) Inventeur: Barraud, Roger
21 Rue Lavoisier
F-91160 Longjumeau(FR)

(74) Mandataire: Gorree, Jean-Michel et al,
Cabinet Plasseraud 84, rue d'Amsterdam
F-75009 Paris(FR)

**(54) Procédé et générateur pour engendrer de l'iode atomique à l'état fondamental et laser chimique à iode en faisant application.**

(57) Pour engendrer de l'iode atomique à l'état fondamental, on a recours à une réaction de combustion entre un comburant et un combustible dont l'un au moins est un composé iodé et qui sont injectés (en 5 et 4) dans une chambre (2), des moyens (10, 14) permettant de doser les deux produits avec un excès du composé iodé par rapport aux proportions stoechiométriques de la combustion, des moyens (21) amorçant la réaction de combustion, et une tuyère supersonique (19) évacuant les produits de réaction parmi lesquels figure l'iode atomique.

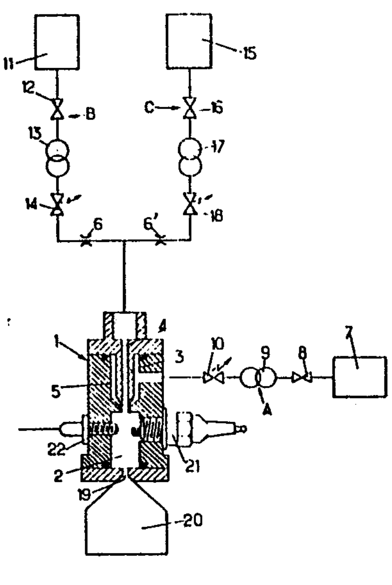


EP 0 237 405 A1

Croydon Printing Company Ltd

<u>Procédé et générateur pour engendrer de l'iode atomique à l'état fondamental, et laser chimique à iode en faisant application</u>.

La présente invention concerne un procédé et un générateur pour engendrer de l'iode atomique à l'état fondamental, et elle concerne également un laser chimique à iode faisant application d'un tel procédé et d'un tel générateur.

L'iode atomique à l'état fondamental trouve une utilisation dans les lasers chimiques à iode. Dans les lasers de ce type actuellement connus, l'iode atomique à l'état fondamental nécessaire à la génération du phénomène laser est obtenu par transfert d'excitation électronique de l'oxygène à l'iode selon le fonctionnement suivant. Du chlore est injecté sous pression réduite (quelques millibars) dans du peroxyde d'hydrogène $H_2O_2$ concentré (par exemple à 85 %), en milieu basique. Il en résulte la production continue d'oxygène moléculaire à l'état singulet $O_2{}^1\Delta$, qui est une espèce chimique métastable dont la durée de vie, sous pression réduite, est suffisante pour permettre son transport dans des canalisations. Il est ainsi possible de l'acheminer tout d'abord vers un piège cryogénique où l'eau provenant de l'évaporation de la solution basique de $H_2O_2$ est en partie retenue, puis vers une zone de mélange avec de l'iode moléculaire. L'injection d'iode moléculaire dans l'écoulement de $O_2{}^1\Delta$ s'accompagne de la dissociation de l'iode moléculaire $I_2$ en iode atomique à l'état fondamental $I_2P_{3/2}$ et de l'excitation électronique de l'iode atomique $I_2P_{3/2}$ en iode atomique à l'état $I_2P_{1/2}$, lequel présente les propriétés requises pour conduire à un effet laser avec une longueur d'onde de 1,315µ.

La dissociation de l'iode moléculaire en iode atomique fondamental, l'excitation de l'iode atomique fondamental en iode atomique excité et, l'obtention du

rayonnement laser peuvent être représentées par le schéma suivant :

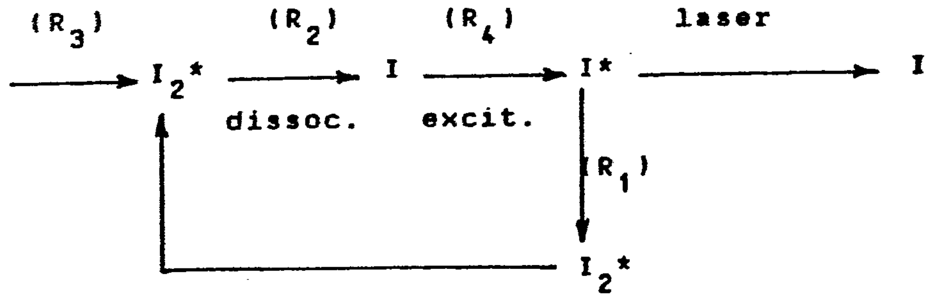


Dans ce schéma $(R_1)$ à $(R_5)$ représentent les réactions chimiques suivantes :

$(R_1)$ $I^*+I_2 \longrightarrow I+I_2^*$ $K(R_1) = 3,5.10^{-11} cm^3 molec^{-1} s^{-1}$

$(R_2)$ $I_2^*+O_2\,^1\Delta \longrightarrow 2I+O_2\,^3\Sigma$ $K(R_2) = 3.10^{-11} cm^3 molec^{-1} s^{-1}$

$(R_3)$ $O_2\,^1\Delta+I_2 \longrightarrow O_2\,^3\Sigma+I_2^*$ $K(R_3) = 7.10^{-15} cm^3 molec^{-1} s^{-1}$

$(R_4)$ $I+O_2\,^1\Delta \longrightarrow I^*+O_2\,^3\Sigma$

$(R_5)$ $I^*+h\nu \longrightarrow I+2h\nu$

dans lesquelles :

$I^*$ représente l'iode atomique excité $I_2$ p1/2

$I^*_2$ représente une forme de l'iode moléculaire vibrationnelement excité,

$O_2\,^3\Sigma$ représente l'oxygène fondamental,

$h\nu$ représente un photon à la longueur d'onde de 1,315µ,

K est la constante de vitesse associée à la réaction considérée.

Ce modèle montre que l'étape de dissociation de l'iode moléculaire en iode atomique est une étape fondamentale, provoquée par une réaction chimique lente $(R_3)$ qui pénalise l'émission du rayonnement laser.

Par ailleurs, il est connu que l'eau présente dans $O_2\,^1\Delta$ est un désactivant de $I^*$ et $I_2^*$ :

$(R_6)$ $I_2^*+H_2O \longrightarrow I_2+H_2O$ $K(R_6) = 3.10^{-10} cm^3 molec^{-1} s^{-1}$

$(R_7)$ $I^*+H_2O \longrightarrow I+H_2O$ $K(R_7) = 2,3.10^{-12} cm^3 molec^{-1} s^{-1}$

Un inconvénient important de ce processus connu

est donc de nécessiter la présence de pièges cryogèniques destinés à éliminer, au moins en grande partie, l'eau qui accompagne le courant d'oxygène singulet $O_2{}^1\Delta$, lesquels pièges cryogéniques élèvent le coût et augmentent la complexité de l'installation.

Un autre inconvénient, non moins important, est que l'iode moléculaire est une espèce chimique dont les propriétés physiques rendent l'utilisation très délicate. Il est en outre très difficile d'obtenir des débits élevés et reproductibles et la présence inévitable de particules solides d'iode pollue la cavité laser.

L'invention a essentiellement pour but de remédier aux inconvénients de l'art antérieur et de proposer une manière originale d'obtention de l'iode atomique à l'état fondamental qui autorise la réalisation de lasers chimiques à iode beaucoup plus performants que ceux réalisés à ce jour.

A ces fins, un premier aspect de l'invention se rapporte à un procédé pour engendrer de l'iode atomique à l'état fondamental qui se caractérise en ce qu'on a recours à une réaction de combustion utilisant un comburant et un combustible dont l'un au moins est un composé iodé en excès par rapport aux proportions stoechiométriques correspondant à la susdite réaction de combustion afin que de l'iode atomique à l'état fondamental soit présent dans les produits issus de la combustion.

Avantageusement, le comburant est choisi parmi $IF_5$, $IF_7$, ICl, $ICl_3$, IBr, $IBr_3$, $I_2$, tandis que le combustible est choisi parmi $H_2$, $C_xH_y$ (hydrocarbures), $C_xF_yH_z$ (fluorohydrocarbures), $N_xH_y$ (amines), $S_xH_y$ (sulfures).

Ou bien, le comburant est choisi parmi $ClF_3$, $ClF_5$, $IF_5$, $F_2$, $NF_3$, $NF_4BF_4$, $(NF_4)_2NiF_6$, $O_2$, $NHO_3$, $N_2O_4$, $H_2O_2$, tandis que le combustible est choisi parmi HI, $CHI_3$, $CI_4$, $CF_3I$, $C_3F_7I$, LiI, NaI, KI.

Un deuxième aspect de l'invention se rapporte à

un générateur d'iode atomique à l'état fondamental qui se caractérise en ce qu'il met en oeuvre une réaction de combustion utilisant un comburant et un combustible dont l'un au moins est un composé iodé en excès par rapport aux proportions stoechiométriques correspondant à la susdite réaction de combustion afin que de l'iode atomique à l'état fondamental soit présent dans les produits issus de la combustion.

Dans un mode de réalisation particulier, ce générateur comprend une chambre de combustion possédant deux injecteurs respectivement pour le combustible et le comburant, des moyens pour doser le combustible et le comburant avec un excès du composé iodé par rapport aux proportions stoechiométriques de la réaction de combustion, des moyens pour amorcer la combustion du mélange combustible-comburant, et une tuyère supersonique de sortie pour recueillir les produits de réaction parmi lesquels figure l'iode atomique.

Avantageusement, dans un tel générateur le comburant est choisi parmi $IF_5$, $IF_7$, $ICl$, $ICl_3$, $IBr$, $IBr_3$, $I_2$, tandis que le combustible est choisi parmi $H_2$, $C_xH_y$ (hydrocarbures), $C_xF_yH_z$ (fluorohydrocarbures), $N_xH_y$ (amines), $S_xH_y$ (sulfures).

Ou bien le comburant est choisi parmi $ClF_3$, $ClF_5$, $IF_5$, $F_2$, $NF_3$, $NF_4BF_4$, $(NF_4)_2NiF_6$, $O_2$, $HNO_3$, $N_2O_4$, $H_2O_2$, tandis que le combustible est choisi parmi $HI$, $CHI_3$, $CI_4$, $CF_3I$, $C_3F_7I$, $LiI$, $NaI$, $KI$.

Grâce aux moyens mis en oeuvre conformément à l'invention, on est maintenant en mesure, du fait de l'élimination de la production d'iode moléculaire difficile à obtenir en quantités suffisantes avec des débits élevés et/ou réguliers, d'engendrer de l'iode atomique à l'état fondamental de façon directe, en des quantités aussi élevées que souhaité et avec des débits qu'il est facile de réguler. En outre, on supprime les pièges cryogéniques jusqu'ici nécessaires pour diminuer

au maximum la présence d'eau.

Un troisième aspect de l'invention se rapporte à une application particulière, de la génération d'iode atomique à l'état fondamental effectuée conformément à l'invention, au laser chimique à iode, lequel se caractérise en ce qu'il comporte :

- une chambre de combustion possédant deux injecteurs pour délivrer respectivement un combustible et un comburant, des moyens pour amorcer la combustion du mélange combustible-comburant, et une tuyère supersonique de sortie pour recueillir les produits issus de la combustion ;

- des premiers moyens pour amener un combustible en quantité et à vitesse réglables à l'un des injecteurs

- des seconds moyens pour amener un comburant en quantité et à vitesse réglables à l'autre injecteur,

- l'un au moins du combustible et du comburant étant un composé iodé en excès par rapport aux proportions stoechiométriques correspondant à la susdite réaction de combustion afin que de l'iode atomique à l'état fondamental soit présent dans les produits issus de la combustion.

La mise en oeuvre de générateurs directs d'iode atomique conformes à l'invention en remplacement des générateurs d'iode moléculaire de l'art antérieur présente des avantages très marqués pour la réalisation de lasers chimiques à iode beaucoup plus performants.

Il est en effet possible d'envisager aisément des lasers chimiques à iode d'une puissance de plusieurs kilowatts en raison de la suppression des difficultés technologiques très importantes liées, entre autres, à l'augmentation correspondante du débit d'iode moléculaire (espèce difficile à transporter) qui serait nécessaire dans un laser à iode de type classique.

Les pièges cryogéniques pour l'élimination de

l'eau, qui étaient indispensables dans les lasers classiques utilisant l'iode moléculaire et qui pénalisaient lourdement le potentiel opérationnel de ces lasers, sont maintenant supprimés dans les lasers à production directe d'iode atomique selon l'invention.

L'étape de dissociation $R_2$, qui est consommatrice d'oxygène singulet et qui par conséquent est limitative de puissance, n'existe plus dans le processus de l'invention, ce qui contribue à un accroissement des puissances des lasers.

Outre cela, il est possible d'obtenir des longueurs d'extraction laser plus courtes selon la direction de l'écoulement, ce qui évite la mise en oeuvre complexe de cavités lasers à passages multiples jusqu'ici nécessaires.

L'invention sera mieux comprise à la lecture de la description qui suit dans laquelle on se réfère au dessin annexé sur lequel la figure unique représente, de façon très schématique, un générateur d'iode atomique à l'état fondamental agencé conformément à l'invention.

Une réaction de combustion susceptible de produire de l'iode atomique peut être représentée par la symbolisation :

$$RI + A \longrightarrow I + P$$

où RI est une molécule transportant l'espèce chimique iode,

I est l'iode atomique, et

P symbolise les autres produits de combustion, parmi lesquels l'iode moléculaire $I_2$ peut être présent ; certains produits peuvent être plus ou moins nuisibles à l'effet laser : dans ce cas leur production doit être minimisée par un meilleur choix de la nature des produits de réaction RI et A et de leur proportions relatives (un exemple de produit néfaste est le carbone solide). Par ailleurs, il n'est pas exclu que la molécule A transporte également l'atome d'iode

(exemple : $IF_5$).

Une combustion peut être considérée comme une variation de composition chimique par atteinte de l'équilibre thermodynamique s'accompagnant d'une chaleur de réaction élevée portant les produits finals à haute température ; ces produits sont alors susceptibles de se présenter à l'état atomique par suite de phénomènes de rupture de liaisons chimiques (dissociation). A ce titre, toute réaction de type RI + A ne conduit pas nécessairement à la production d'iode atomique ; il faut pour cela que la température finale soit assez élevée pour conduire à la dissociation de l'iode moléculaire en iode atomique. Il est donc nécessaire de sélectionner des compositions d'entrée et de vérifier par le calcul théorique, à partir des chaleurs de formation des espèces initiales et finales (dans une première étape sans pertes thermiques et dans une seconde étape avec pertes thermiques), la réalité de la présomption de production d'iode atomique.

Par ailleurs la formation d'iode atomique à l'état fondamental nécessite que le composé iodé participant à la combustion soit légèrement en excès par rapport aux proportions stoechiométriques correspondant à la réaction de combustion considérée.

Le complément moléculaire de I dans RI, soit R, est plutôt comburant, c'est-à-dire à caractère oxydant, ou plutôt combustible, c'est-à-dire à caractère réducteur. Cette classification n'est pas absolue puisque le caractère comburant ou combustible dépend du couple d'espèces ; ainsi, à titre d'exemple, le chlore est combustible vis-à-vis du fluor et comburant vis-à-vis de l'hydrogène. Ceci permet néanmoins de faire apparaître des séries d'espèces chimiques susceptibles d'être utilisées pour l'obtention d'iode atomique :

a) Cas de R à caractère comburant :

$IF_5$, $IF_7$ pour le fluor

$ICl$, $ICl_3$ pour le chlore

$IBr$, $IBr_3$ pour le brome

$I_2$ pour l'iode

b) Cas de R à caractère combustible :

$HI$ pour l'hydrogène

$CHI_3$, $CI_4$ pour les hydrocarbures

$CF_3I$, $C_3F_7I$ pour les fluorocarbures

$LiI$, $NaI$, $KI$ pour les métaux

Le même critère peut être adopté pour la molécule A :

c) Cas de A combustible :

$H_2$ pour l'hydrogène

$C_xH_y$ pour les hydrocarbures

$C_xF_yH_z$ pour les fluorohydrocarbures

$N_xH_y$ pour les amines

$S_xH_y$ pour les sulfures

d) Cas de A comburant :

$ClF_3$, $ClF_5$, $IF_5$ pour les interhalogènes $X_xY_y$

$F_2$ pour le fluor

$NF_3$, $NF_4$, $BF_4$, $(NF_4)_2NiF_6$ pour les fluoramines $N_xF_y$

$O_2$, $HNO_3$, $N_2O_4$, $H_2O_2$ pour les oxygénants.

L'état physique de chacun des termes de cette liste n'est pas précisé. Ainsi, on pourrait imaginer une association de type propergol solide pour le couple $(NF_4)_2NiF_6+I_2$ ou de type biliquide pour le couple $ClF_5$ + $IF_5$. Cependant, le cas des gaz est préféré pour des raisons pratiques de débitmétrie.

Le taux de production d'iode atomique théorique est indiqué ci-après pour quelques réactions données uniquement à titre d'exemple :

- la combustion $F_5I + 5H_2$ (richesse 2) conduit à la formation de 11 % d'iode atomique ;

- la combustion $2I_2 + F_2$ (richesse 2) conduit à la formation de 11 % d'iode atomique ;

- la combustion $CI_4$ + 4/5 $IF_5$ (richesse 1) conduit à la formation de 51,6 % d'iode atomique ;

- la combustion $CHI_3$ + 5/2$F_2$ (richesse 1) conduit à la formation de 45,8 % d'iode atomique ;

- la combustion $2I_2$ + $H_2$ (richesse 0,5) ne conduit pas à la formation d'iode atomique.

Toutefois, il faut noter que le taux de formation d'iode atomique est à la fois fonction de la richesse et de la pression. A titre d'exemple, la combustion $C_3F_7I$ + $NF_3$ fournit, pour une pression de 1 bar, un taux maximum de 17 % d'iode atomique pour une richesse de 1 ; l'évolution de ce taux est croissante avec la richesse, mais avec production de carbone solide à partir d'une richesse de 1,2. Sous une pression de 6 bars, les résultats sont sensiblement identiques. Pour cette combustion, il est donc nécessaire de maintenir la richesse inférieure à 1,2 afin d'éviter la formation de carbone solide qui entraîne une perturbation du fonctionnement de l'appareillage.

A titre de deuxième exemple, la combustion $CF_3I$ + $NF_3$ fournit, pour une pression de 1 bar, un taux maximum de 43 % d'iode atomique pour une richesse (maximum) de 1 ; toutefois, du carbone solide apparaît à partir de la richesse 1. Pour une pression de 6 bars, il y a formation de 39 % d'iode atomique avec les mêmes remarques. Il y a donc intérêt à travailler avec une richesse un peu inférieure à 1 afin d'éviter la formation de carbone solide.

A titre de troisième exemple, la combustion HI + $NF_3$ fournit, à la pression de 1 bar, un taux d'iode atomique de 49 % pour la richesse maximale de 1,5, alors qu'à la pression de 6 bars, le taux est de 48 % pour une richesse maximale de 1,2.

Le générateur d'iode atomique représenté à la figure unique comprend une enceinte 1 définissant une chambre de combustion dans laquelle débouche un système

d'injection pour l'amenée du combustible et du comburant. Le système d'injection est de type coaxial, avec injection centrale du combustible et injection externe du comburant. Il comprend une partie mâle 3 munie d'un perçage axial 4 pour l'amenée du combustible ; cette partie mâle s'étend dans une cavité 5 de l'enceinte, cavité avec les parois de laquelle elle définit un conduit annulaire, communiquant vers le bas avec la chambre 2, pour l'amenée du comburant. La partie mâle 3 est déplaçable axialement (par exemple par le biais d'une fixation filetée) de manière à pouvoir modifier l'ouverture de l'injecteur annulaire et donc la vitesse d'injection du comburant. Le réglage de la vitesse d'injection du combustible s'effectue par modification du diamètre du conduit d'amenée du combustible, par exemple par le biais d'étranglements réglables 6.

Le circuit A d'alimentation en comburant comprend notamment un réservoir 7 de comburant sous pression, une vanne de distribution 8, un détendeur 9 et un organe de régulation et de mesure 10 du débit du comburant.

Le circuit B d'alimentation en combustible est constitué de la même manière et comprend notamment un réservoir 11 de combustible sous pression, une vanne de distribution 12, un détendeur 13 et un organe de régulation et de mesure 14 du débit du combustible, suivi de l'étranglement 6 ci-dessus mentionnée.

Eventuellement, dans le cas où un préchauffage de la chambre est nécessaire, il est adjoint, au circuit d'alimentation en combustible, un circuit C d'alimentation en combustible de préchauffage qui comprend un réservoir 15 de combustible de préchauffage, une vanne 16 de distribution, un détendeur 17 et un organe de régulation et de mesure 18 du débit de combustible auxiliaire, suivi d'un étranglement 6' de réglage de la vitesse d'injection.

Compte tenu du principe de production thermique de l'iode atomique par combustion et de la nécessité d'en disposer à une température voisine de la température ambiante, il est nécessaire d'avoir recours à une détente figée (conservation de l'iode sous sa forme atomique en même temps que refroidissement rapide) qui est obtenue par une tuyère supersonique 19 située à la sortie de la chambre de combustion, à l'opposé du système d'injection.

L'iode atomique est ensuite dirigé vers son lieu d'utilisation 20 sans subir de recombinaison notable. Il peut s'agir, dans l'application envisagée plus spécifiquement ici, d'une cavité laser dans laquelle l'iode atomique à l'état fondamental est mélangé avec l'oxygène singulet.

Les moyens d'allumage destinés à amorcer la combustion, soit combustion principale (par exemple $CF_3I$ + $NF_3$) soit combustion de préchauffage de la chambre (par exemple $H_2$ + $NF_3$), peuvent être de tous types appropriés par exemple allumage hypergolique par le fluor, allumage par bougie préchauffée, etc... Dans l'exemple représenté sur la figure, il est obtenu à l'aide d'une bougie à étincelle 21 vissée dans la paroi de la chambre 2.

En outre, il est possible de disposer dans la chambre des moyens de détection 22 (par exemple thermocouple et/ou capteur de pression) permettant de contrôler le déroulement de la réaction de combustion.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

REVENDICATIONS

1. Procédé pour engendrer de l'iode atomique à l'état fondamental, caractérisé en ce qu'on a recours à une réaction de combustion utilisant un comburant et un combustible dont l'un au moins est un composé iodé en excès par rapport aux proportions stoechiométriques correspondant à la susdite réaction de combustion afin que de l'iode atomique à l'état fondamental soit présent dans les produits issus de la combustion.

2. Procédé selon la revendication 1, caractérisé en ce que le comburant est choisi parmi $IF_5$, $IF_7$, $ICl$, $ICl_3$, $IBr$, $IBr_3$, $I_2$, tandis que le combustible est choisi parmi $H_2$, $C_xH_y$ (hydrocarbures), $C_xF_yH_z$ (fluorohydrocarbures), $N_xH_y$ (amines), $S_xH_y$ (sulfures).

3. Procédé selon la revendication 1, caractérisé en ce que le comburant est choisi parmi $ClF_3$, $ClF_5$, $IF_5$, $F_2$, $NF_3$, $NF_4BF_4$, $(NF_4)_2NiF_6$, $O_2$, $NHO_3$, $N_2O_4$, $H_2O_2$, tandis que le combustible est choisi parmi $HI$, $CHI_3$, $CI_4$, $CF_3I$, $C_3F_7I$, $LiI$, $NaI$, $KI$.

4. Générateur d'iode atomique à l'état fondamental, caractérisé en ce qu'il met en oeuvre une réaction de combustion utilisant un comburant et un combustible dont l'un au moins est un composé iodé en excès par rapport aux proportions stoechiométriques correspondant à la susdite réaction de combustion afin que de l'iode atomique à l'état fondamental soit présent dans les produits issus de la combustion.

5. Générateur d'iode atomique selon la revendication 4, caractérisé en ce qu'il comprend une chambre de combustion (2) possédant deux injecteurs (4,5) respectivement pour le combustible et le comburant, des moyens (10,14) pour doser le combustible et le comburant avec un excès du composé iodé par rapport aux proportions stoechiométriques de la réaction de combustion, des moyens (21) pour amorcer la combustion du mélange combustible-comburant, et une tuyère supersonique de

sortie (19) pour les produits de réaction parmi lesquels figure l'iode atomique.

6. Générateur d'iode atomique selon la revendication 4 ou 5, caractérisé en ce que le comburant est choisi parmi $IF_5$, $IF_7$, ICl, $ICl_3$, IBr, $IBr_3$, $I_2$, tandis que le combustible est choisi parmi $H_2$, $C_xH_y$ (hydrocarbures), $C_xF_yH_z$ (fluorohydrocarbures), $N_xH_y$ (amines), $S_xH_y$ (sulfures).

7. Générateur d'iode atomique selon la revendication 4 ou 5, caractérisé en ce que le comburant est choisi parmi $ClF_3$, $ClF_5$, $IF_5$, $F_2$, $NF_3$, $NF_4BF_4$, $(NF_4)_2NiF_6$, $O_2$, $HNO_3$, $N_2O_4$, $H_2O_2$, tandis que le combustible est choisi parmi HI, $CHI_3$, $CI_4$, $CF_3I$, $C_3F_7I$, LiI, NaI, KI.

8. Laser chimique à iode, caractérisé en ce qu'il comporte :

- une chambre de combustion (2) possédant deux injecteurs (4,5) pour délivrer respectivement un combustible et un comburant, des moyens (21) pour amorcer la combustion du mélange combustible-comburant, et une tuyère supersonique de sortie (19) pour les produits issus de la combustion ;

- des premiers moyens (14) pour amener un combustible en quantité et à vitesse réglables à l'un des injecteurs

- des seconds moyens (10) pour amener un comburant en quantité et à vitesse réglables à l'autre injecteur,

- l'un au moins du combustible et du comburant étant un composé iodé en excès par rapport aux proportions stoechiométriques correspondant à la susdite réaction de combustion afin que de l'iode atomique à l'état fondamental soit présent dans les produits issus de la combustion.

0237405

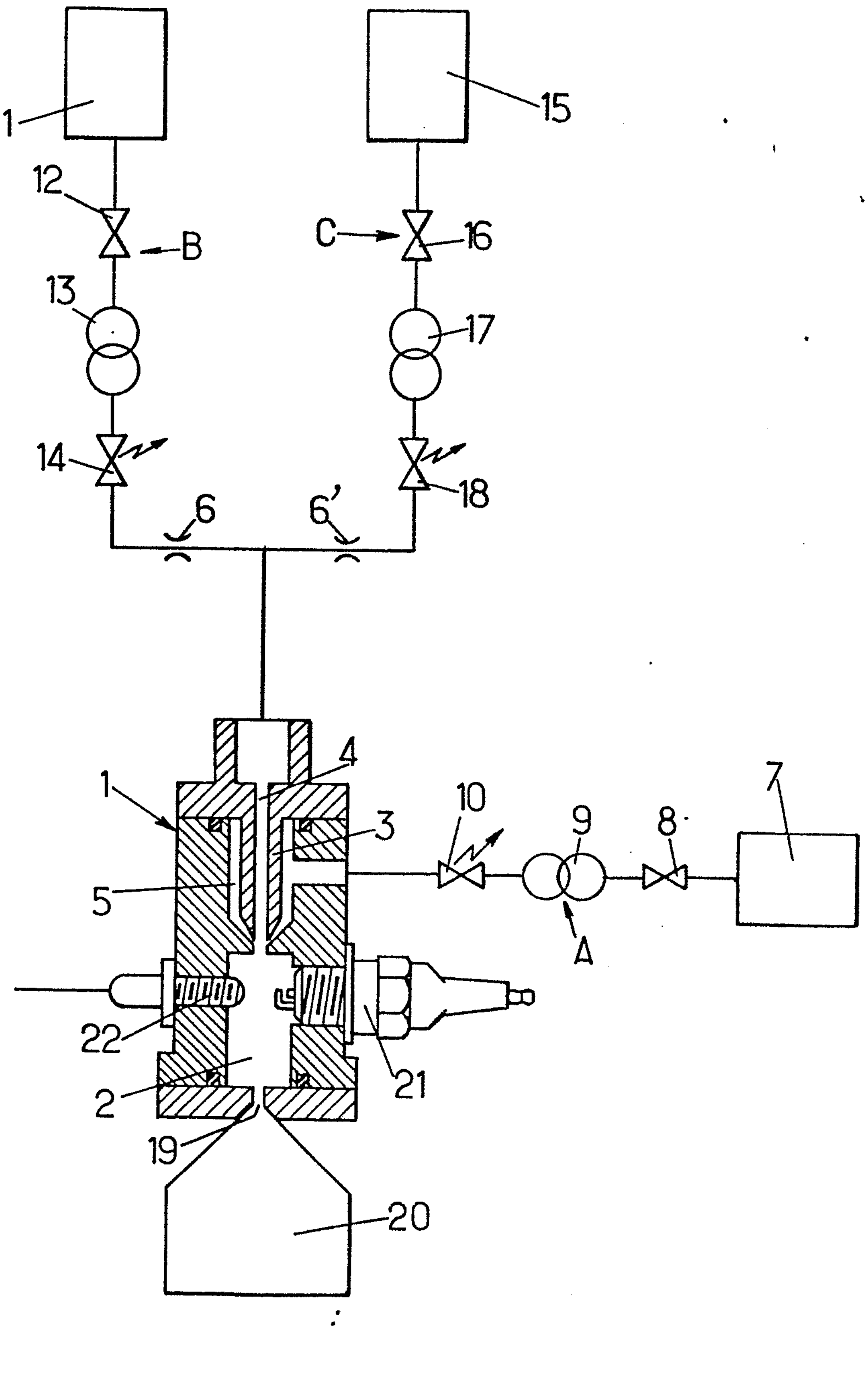

Office européen des brevets

# RAPPORT DE RECHERCHE EUROPEENNE

Numero de la demande

**0237405**

EP 87 40 0430

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | FR-A-2 298 205 (TRW INC.)<br>--- | | C 01 B 7/14<br>H 01 S 3/095 |
| A | US-A-3 928 821 (D.W. GREGG et al.)<br>--- | | |
| A | CHEMICAL ABSTRACTS, vol. 103, no. 6, 12 août 1985, page 541, résumé no. 45247x, Columbus, Ohio, US; H. BRUNET et al.: "On the presence of excited atomic iodine(2P1/2) as a product of the atomic fluorine + molecular iodine reaction", & CHEM. PHYS. LETT. 1985, 117(4), 371-4<br>--- | | DOMAINES TECHNIQUES RECHERCHES (Int Cl 4) |
| A | CHEMICAL ABSTRACTS, vol. 101, no. 2, 9 juillet 1984, page 449, résumé no. 14403z, Columbus, Ohio, US; P. DAS et al.: "On the absence of atomic iodine (2P1/2) as a product of the reactions of fluorine atoms with hydrogen iodide, molecular iodine, and iodine cyanide (ICN)", & J. CHEM. PHYS. 1984, 80(10), 4859-62<br>----- | | C 01 B<br>H 01 S<br>B 01 J |

Le présent rapport de recherche a été établi pour toutes les revendications

| Lieu de la recherche | Date d'achèvement de la recherche | Examinateur |
|---|---|---|
| LA HAYE | 13-05-1987 | VAN BELLINGEN I.C.A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant